(19) Europäisches Patentamt
European Patent Office
Office européen des brevets

(11) **EP 3 093 322 B1**

(12) **EUROPÄISCHE PATENTSCHRIFT**

(45) Veröffentlichungstag und Bekanntmachung des Hinweises auf die Patenterteilung:
**14.08.2024 Patentblatt 2024/33**

(21) Anmeldenummer: **16166303.4**

(22) Anmeldetag: **21.04.2016**

(51) Internationale Patentklassifikation (IPC):
*C09J 7/10* $^{(2018.01)}$       *C09J 133/08* $^{(2006.01)}$
*C09J 133/02* $^{(2006.01)}$     *C08F 220/18* $^{(2006.01)}$
*C08K 7/16* $^{(2006.01)}$       *C08K 7/20* $^{(2006.01)}$
*C08K 7/24* $^{(2006.01)}$

(52) Gemeinsame Patentklassifikation (CPC):
(C-Sets verfügbar)
**C09J 133/08; C08F 220/1808; C09J 7/10;**
**C09J 133/02;** C08F 220/1804; C08K 7/16;
C08K 7/20; C08K 7/24; C08K 2201/003;
C09J 2301/208; C09J 2301/312; C09J 2301/408;
C09J 2301/412; C09J 2433/00                    (Forts.)

(54) **HAFTKLEBEMASSE FÜR GESCHÄUMTE KLEBEBÄNDER ENTHALTEND EINES POLY(METH)ACRYLATS, ANORGANISCHEN MIKROKUGELN UND EXPANDIERTE MIKROBALLONS.**

ADHESIVE MASS FOR FOAM-LIKE TAPES COMPRISING A POLY (METH)ACRYLATE, INORGANIC MICROSPHERES AND EXPANDED MICROSPHERES

MASSE ADHESIVE POUR BANDES CONTENANT UN POLYMÈRE ACRYLIQUE, DES MICROSPHÈRES INORGANIQUES ET DES MICROSPHÈRES EXPANSÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2015 DE 102015208792**

(43) Veröffentlichungstag der Anmeldung:
**16.11.2016 Patentblatt 2016/46**

(73) Patentinhaber: **tesa SE**
**22848 Norderstedt (DE)**

(72) Erfinder:
• **Melnikova, Aliona**
 **22607 Hamburg (DE)**
• **Hansen, Sven**
 **22765 Hamburg (DE)**
• **Müssig, Dr. Bernhard**
 **21218 Seevetal (DE)**
• **Schmidt-Lehr, Sebastian**
 **21217 Seevetal (DE)**

(74) Vertreter: **tesa SE**
 **Hugo-Kirchberg-Straße 1**
 **22848 Norderstedt (DE)**

(56) Entgegenhaltungen:
EP-A1- 2 735 595          WO-A1-2005/121267
DE-A1- 102013 215 296    US-A- 4 855 170

(52) Gemeinsame Patentklassifikation (CPC): (Forts.)

    C-Sets
    **C09J 133/08, C08K 3/013, C08K 7/20;**
    **C09J 133/08, C08K 7/20;**
    **C09J 133/08, C08K 7/24;**
    C08F 220/1808, C08F 220/14, C08F 220/06

**Beschreibung**

Die Erfindung betrifft das technische Gebiet der Haftklebemassen, wie sie in Klebebändern zum temporären oder permanenten Verbinden von Substraten, beispielsweise von Bauteilen, verwendet werden. Insbesondere werden Haftklebemassen vorgeschlagen, die hohe Adhäsion mit starker Kohäsion und einstellbarem kohäsiven Versagensverhalten verbinden.

Für das anwendungstechnische Anforderungsprofil von druckempfindlichen Klebesystemen und den damit hergestellten Haftklebeartikeln sind die zwei physikalischen Parameter Adhäsion und Kohäsion von grundsätzlicher Bedeutung. Die Adhäsion wird im technischen Sprachgebrauch unter den Begriffen Sofortklebkraft (Tack) und Klebkraft (Peel Strength) behandelt und ist die physikalische Größe hinter Begriffen wie "selbstklebend", "Haftkleber" und "druckempfindliche Klebemasse" ("Pressure Sensitive Adhesive"), mit denen die Erzielung einer mehr oder weniger "dauerhaften Verklebung unter leichtem Andruck" beschrieben wird. Die Kohäsion ist verantwortlich für die innere Festigkeit einer druckempfindlichen Klebemasse. Diese verleiht dem System Widerstandsfähigkeit gegenüber Scherbeanspruchung, die beispielsweise beim Einsatz der entsprechenden Produkte bei höheren Temperaturen und/oder mechanischen Belastungen auftritt.

Die Leistungsfähigkeit von Haftklebemassen wird somit wesentlich durch das Verhältnis ihrer Adhäsions- und Kohäsionseigenschaften bestimmt. Diese wiederum sind u.a. determiniert durch die Natur, Verträglichkeit, Homogenität und Stabilität der Massebestandteile.

Zur Erzielung bestimmter Eigenschaften, beispielsweise hoher Klebfestigkeiten, in einer Haftklebemasse ist es im Stand der Technik bekannt, auf höhermolekulare und stark vernetzte Polymerbausteine und/oder auf Füllstoffe enthaltende Systeme zurückzugreifen. So beschreibt EP 0 818 521 A2 ein dreischichtiges Klebeband, das eine auf vernetzten Kautschuken basierende Trägerschicht aufweist. Der Kautschuk des Trägers kann darüber hinaus mit verstärkenden Füllstoffen versetzt sein.

Eine druckempfindliche Klebstoffschicht mit guter Resistenz gegenüber Abschälen und Scherkräften wird in DE 28 21 606 A1 vorgestellt. Die Klebstoffschicht hat eine Dicke von mehr als 200 $\mu$m und enthält in der gesamten Schicht dispergierte Glasmikrohohlkugeln.

EP 1 995 282 A1 hat eine Mikropartikel enthaltende viskoelastische Schicht zum Gegenstand, wobei die Mikropartikel zu 90 % einen Durchmesser von 30 $\mu$m oder weniger haben. Die viskoelastische Schicht kann als Haftklebstoffschicht oder als Substrat eines Klebebandes eingesetzt werden.

US 2007/0104943 A1 beschreibt mit Mikrohohlkörpern gefüllte Harz- oder Polymerzusammensetzungen, wobei der D50-Durchmesser der Mikrohohlkörper 25 $\mu$m oder weniger beträgt. Die Zusammensetzungen sollen überdurchschnittliche Schlagzähigkeit und Elongation aufweisen.

Für eine Vielzahl von Anwendungen druckempfindlicher Klebesysteme haben sich geschäumte Systeme als zunehmend wichtig erwiesen. Schäume sind beispielsweise in der Lage, eine Pufferwirkung auszuüben, indem sie kinetische Energie absorbieren; ebenso können sie Unebenheiten in den Verklebungsgrenzflächen ausgleichen, da sie sich häufig leicht verformen können. Um Schäume für Haftklebeartikel nutzbar zu machen, können sowohl geschäumte Trägermaterialien als auch geschäumte Haftklebemassen zum Einsatz kommen.

DE 10 2009 015 233 A1 beschreibt ein Verfahren zur Herstellung eines geschäumten Massesystems, das thermisch empfindliche Substanzen enthält. Das Massesystem wird in einem ersten Schritt bei einer ersten Temperatur geschäumt, und die thermisch empfindlichen Substanzen werden in einem folgenden Schritt bei einer niedrigeren Temperatur zu dem Massesystem gegeben. Es wird auch die Verwendung derart erhaltener Massesysteme als Selbstklebemasse für Klebebänder beschrieben.

Ein Schäumungsverfahren unter Verwendung expandierbarer Mikrohohlkugeln, wobei deren Expansion innerhalb der Mischapparatur weitgehend unterdrückt wird, ist in DE 10 2010 062 669 A1 beschrieben. Auch die in dieser Schrift beschriebenen Massen sollen als Träger und/oder als permanent klebrige Oberflächenschicht eines Klebebandes verwendet werden.

WO 2010/147888 A2 beschreibt einen Schaum, der ein Polymer, eine Vielzahl zumindest teilweise expandierter expandierbarer Polymermikrokugeln und 0,3 bis 1,5 Gew.-% eines Siliziumdioxids mit einer Oberfläche von mindestens 300 $m^2$/g umfasst. US 4 855 170 A offenbart Klebebänder, die durch die Zugabe von Füllstoffen, insbesondere Mikrokugeln, erlauben, Eigenschaften wie z.B Adhäsion, statische Scherung oder Zugfestigkeit gezielt zu steuern

Es besteht ein anhaltender Bedarf an Klebebändern mit speziellen, auf bestimmte Anwendungen abgestimmten Eigenschaften. So sind beispielsweise für Außenanwendungen im Baubereich Verklebungen von Interesse, die Widerstand gegen Windlasten, also gegen kurzfristig auftretende Belastungsspitzen, sowie gegen Eigengewichtsabtrag bieten und darüber hinaus thermische Spannungen gut ausgleichen können. Wichtig ist es dabei, dass die Leistungsfähigkeit solcher Verklebungen sicher berechnet und vorhergesagt werden kann. Dies lässt sich bei Klebebändern mit vorhersagbarem kohäsiven Versagen wesentlich besser durchführen als bei solchen, die auch oder gar überwiegend adhäsives Versagen zeigen. Aufgabe der Erfindung ist es somit, Basismassen für geschäumte ein- oder mehrschichtige Klebebänder zur Verfügung zu stellen, die diesen Systemen hohe Adhäsion, insbesondere immer eine höhere Adhäsion als Kohäsion und folglich ein einstellbares, vorhersagbares Versagensverhalten in Form eines sogenannten Kohäsionsbruchs - also eines Bruchs innerhalb der Klebeschicht und nicht in deren Grenzflächen zum Substrat - verleihen. Trotz dieses vorgegebenen Versagensverhaltens sollen die Massen selbstverständlich stabile, leistungsfähige Verklebungen ermöglichen.

Der Lösung der Aufgabe liegt als ein zentraler Gedanke der Erfindung eine Kombination von zumindest teilweise expandierten Mikroballons mit anorganischen Füllstoffen zugrunde.

Ein erster allgemeiner Gegenstand der Erfindung ist eine Haftklebemasse, die

- mindestens 30 Gew.-% mindestens eines Poly(meth)acrylats;
- 10 - 60 Gew.-% dreidimensionale Körper K aus einem anorganischem Material mit einer maximalen Ausdehnung von 40 bis 300 $\mu$m; und
- 0,1 - 10 Gew.-% zumindest teilweise expandierte Mikroballons M

enthält, jeweils bezogen auf das Gesamtgewicht der Haftklebemasse.

Unter einer Haftklebemasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos$(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin$(\delta)$ ($\tau$ = Schubspannung, $\gamma$ = Deformation, $\delta$ = Phasenwinkel = Phasenverschiebung zwischen Schubspannungs- und Deformationsvektor).

Eine Masse gilt im Allgemeinen als Haftklebemasse und wird im Sinne der Erfindung als solche definiert, wenn bei 23°C im Deformationsfrequenzbereich von $10^0$ bis $10^1$ rad/sec sowohl G' als auch G" zumindest zum Teil im Bereich von $10^3$ bis $10^7$ Pa liegen. "Zum Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb des entsprechenden Fensters liegt.

Die erfindungsgemäße Haftklebemasse liegt bevorzugt in Form eines Flächengebildes vor. Darunter wird ein dreidimensionales Gebilde verstanden, dessen Ausdehnung in zwei Raumrichtungen deutlich größer ist als seine Ausdehnung in die dritte Raumrichtung. Insbesondere wird eine Schicht einer Haftklebemasse, wie sie üblicherweise in einem Haftklebeband zu finden ist, als Flächengebilde aufgefasst. Besonders bevorzugt liegt die erfindungsgemäße Haftklebemasse als Flächengebilde vor, und die Dicke (die kleinste in einer der drei Raumrichtungen vorliegende Ausdehnung des Flächengebildes) beträgt 400 bis 5000 $\mu$m, stärker bevorzugt 500 bis 2000 $\mu$m. Die Dicke des Flächengebildes wird erfindungsgemäß mit einem handelsüblichen Dickenmessgerät, das mit einem Dickentaster versehen ist, gemessen. Das aus der erfindungsgemäßen Haftklebemasse bestehende Flächengebilde wird zu diesem Zweck mit einer Releasefolie abgedeckt, damit der Taster nicht zu weit in die Klebmasse eindringt. Für die abgedeckten Klebmassen wird beispielsweise eine Kugelkalotte als Dickentaster verwendet. Es muss auch die Dicke der Abdeckfolie ermittelt werden, so dass die Dicke des Flächengebildes durch Differenzbildung ermittelt werden kann. Zur Messung der Dicke der Abdeckfolie wird beispielsweise eine Rubinkugel als Dickentaster verwendet. Es wird jeweils mindestens im Abstand von 100 m entlang der Längsausdehnung des Flächengebildes bzw. der Abdeckfolie an mindestens 10 Messpunkten quer zur Bahn gemessen. Die Dicke wird als Mittelwert der erhaltenen Ergebnisse angegeben.

Unter einem "Poly(meth)acrylat" wird ein Polymer verstanden, dessen Monomerbasis zu mindestens 70 Gew.-% aus Acrylsäure, Methacrylsäure, Acrylsäureestern und/oder Methacrylsäureestern besteht, wobei Acrylsäureester und/oder Methacrylsäureester zu mindestens 50 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten.

Bevorzugt kann das Poly(meth)acrylat der erfindungsgemäßen Haftklebemasse auf die folgende Monomerzusammensetzung zurückgeführt werden:

a) Acrylsäureester und/oder Methacrylsäureester der Formel (I)

$$CH_2 = C(R^I)(COOR^{II}) \qquad (I),$$

worin $R^I$ = H oder $CH_3$ und $R^{II}$ ein Alkylrest mit 4 bis 14 C-Atomen, besonders bevorzugt mit 4 bis 9 C-Atomen, ist;
b) olefinisch ungesättigte Monomere mit funktionellen Gruppen, die eine Reaktivität mit Vernetzersubstanzen aufweisen;
c) optional weitere olefinisch ungesättigte Monomere, die mit den Monomeren (a) und (b) copolymerisierbar sind.

Die Anteile der Monomere a), b), und c) sind besonders bevorzugt derart gewählt, dass das Poly(meth)acrylat eine Glastemperatur von $\leq$ 15 °C (DMA bei geringen Frequenzen) aufweist. Dazu ist es vorteilhaft, die Monomere a) mit einem Anteil von 45 bis 99 Gew.-%, die Monomere b) mit einem Anteil von 1 bis 15 Gew.-% und die Monomere c) mit einem Anteil von 0 bis 40 Gew.-% zu wählen, jeweils bezogen auf die gesamte Monomerenzusammensetzung des Poly( meth)acrylats.

Die Monomere a) sind besonders bevorzugt weichmachende und/oder unpolare Monomere. Vorzugsweise sind die Monomere a) daher ausgewählt aus der Gruppe umfassend n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat und 2-Ethylhexylmethacrylat.

Die Monomere b) sind bevorzugt olefinisch ungesättigte Monomere mit funktionellen Gruppen, die eine Reaktion mit Epoxidgruppen eingehen können. Besonders bevorzugt enthalten die Monomere b) jeweils mindestens eine funktionelle Gruppe ausgewählt aus der Gruppe bestehend aus Hydroxy-, Carboxy-, Sulfonsäure- und Phosphonsäuregruppen, Säureanhydridfunktionen, Epoxidgruppen und substituierten oder unsubstituierten Aminogruppen.

Insbesondere sind die Monomere b) ausgewählt aus der Gruppe bestehend aus Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat, Allylalkohol, Glycidylacrylat und Glycidylmethacrylat.

Als Monomere c) kommen prinzipiell alle vinylisch funktionalisierten Verbindungen in Frage, die mit den Monomeren a) und den Monomeren b) copolymerisierbar sind. Mit Auswahl und Menge der Monomere c) lassen sich vorteilhaft Eigenschaften der erfindungsgemäßen Haftklebemasse regulieren.

Die Monomere c) sind besonders bevorzugt ausgewählt aus der Gruppe bestehend aus Methylacrylat, Ethylacrylat, n-Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, 2-Butoxyethylmethacrylat, 2-Butoxyethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Diethylaminoethylacrylat, Diethylaminoethylmethacrylat, Dimethylaminoethylacrylat, Dimethylaminoethylmethacrylat, , 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dialkyl-substituierten Amiden, insbesondere N,N-Dimethylacrylamid, N,N-Dimethylmethacrylamid, N-Benzylacrylamid, N-Isopropylacrylamid, N-tert-Butylacrylamid, N-tert-Octylacrylamid, N-Methylolacrylamid, N-Methylolmethacrylamid; weiter Acrylnitril, Methacrylnitril; Vinylethern wie Vinylmethylether, Ethylvinylether, Vinylisobutylether; Vinylestern wie Vinylacetat; Vinylchlorid, Vinylhalogeniden, Vinylidenhalogeniden, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, 2-Polystyrolethylmethacrylat (Molukulargewicht Mw von 4000 bis 13000 g/mol) und Poly(Methylmethacrylat)ethylmethacrylat (Mw von 2000 bis 8000 g/mol).

Die Monomere c) können vorteilhaft auch derart gewählt werden, dass sie funktionelle Gruppen enthalten, die eine strahlenchemische Vernetzung (beispielsweise durch Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofurfurylacrylat, N-tert-Butylacrylamid und Allylacrylat.

Besonders bevorzugt sind, sofern die erfindungsgemäße Haftklebemasse mehrere Poly(meth)acrylate enthält, alle Poly(meth)acrylate der erfindungsgemäßen Haftklebemasse auf die vorstehend beschriebene Monomerenzusammensetzung zurückzuführen. Insbesondere sind alle Poly(meth)acrylate der erfindungsgemäßen Haftklebemasse auf eine Monomerenzusammensetzung bestehend aus Acrylsäure, n-Butylacrylat und Methylacrylat zurückzuführen.

Insbesondere ist das Poly(meth)acrylat bzw. sind alle Poy(meth)acrylate der erfindungsgemäßen Haftklebemasse auf die folgende Monomerenzusammensetzung zurückzuführen:

| | |
|---|---|
| Acrylsäure | 3 - 15 Gew.-% |
| Methylacrylat | 10 - 35 Gew.-% |
| 2-Ethylhexylacrylat | 50 - 87 Gew.-%, |

wobei sich die Anteile der Monomeren zu 100 Gew.-% addieren.

Die Poly(meth)acrylate können durch radikalische Polymerisation der Monomere in Lösungsmitteln, insbesondere in Lösungsmitteln mit einem Siedebereich von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt werden.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) oder 2,2'-Azobis(2-methylpropionitril) (2,2'-Azobisisobutyronitril; AIBN) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Erfindungsgemäß bevorzugt erfolgt nach der Herstellung (Polymerisation) der Poly(meth)acrylate eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Substanzklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte Mw der Poly(meth)acrylate der erfindungsgemäßen Haftklebemasse liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes Mw und der Polydisperistät PD in dieser Schrift beziehen sich auf die Bestimmung per Gelpermeationschromatographie. Es kann vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Poly(meth)acrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Erfindungsgemäß ebenfalls geeignet sind Poly(meth)acrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit.

Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Daneben lässt sich die Atom Transfer Radical Polymerization (ATRP) in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden.

Das bzw. die Poly(meth)acrylat(e) der erfindungsgemäßen Haftklebemasse ist/sind bevorzugt vernetzt. Zwar lassen sich dicke Masseschichten - wegen der mit fortschreitender Eindringtiefe rasch abnehmenden Strahlungsintensität - kaum über die übliche Elektronenstrahlen- oder UV-Strahlenbehandlung homogen vernetzen, aber eine thermische Vernetzung schafft hierfür hinreichende Abhilfe. Die erfindungsgemäße Haftklebemasse ist daher bevorzugt thermisch vernetzt. Als dicke Masseschichten werden insbesondere solche Schichten angesehen, die mehr als 150 $\mu$m dick sind.

Bevorzugt sind die Poly(meth)acrylate der erfindungsgemäßen Haftklebemasse mit Isocyanaten, insbesondere mit trimerisierten Isocyanaten und/oder blockierungsmittelfreien und sterisch gehinderten Isocyanaten, und/oder Epoxidverbindungen vernetzt, jeweils bei Anwesenheit funktioneller Gruppen in den Polymer-Makromolekülen, die mit Isocyanatgruppen bzw. Epoxidgruppen reagieren können.

Um die Reaktivität der Isocyanate abzuschwächen, können vorteilhaft mit thermisch abspaltbaren funktionellen Gruppen blockierte Isocyanate eingesetzt werden. Zur Blockierung werden bevorzugt aliphatische primäre und sekundäre Alkohole, Phenolderivate, aliphatische primäre und sekundäre Amine, Lactame, Lactone und Malonsäureester verwendet.

Werden Epoxid-Amin-Systeme als Vernetzersysteme eingesetzt, können die Amine in ihre Salze überführt werden, um eine Erhöhung der Topfzeit zu gewährleisten. Dabei werden leicht flüchtige organische Säuren (z.B. Ameisensäure, Essigsäure) oder leicht flüchtige Mineralsäuren (z.B. Salzsäure, Derivate der Kohlensäure) zur Salzbildung bevorzugt.

Ein grundsätzliches Problem beim Einsatz thermischer Vernetzer bei der Herstellung der erfindungsgemäßen Haftklebemasse ergibt sich aus der zur Expansion der Mikroballons benötigten Temperaturerhöhung. Die Wahl der oben genannten, relativ reaktionsträgen Vernetzer, besonders bevorzugt zusammen mit Beschleuniger-Systemen zur Regulierung der Kinetik der Vernetzungsreaktion, ist besonders vorteilhaft, da mit diesen Vernetzern die für die Schäumung erforderlichen Temperaturen angewendet werden können, ohne dass das Massesystem Schaden nimmt.

Als besonders bevorzugt für die erfindungsgemäße Haftklebemasse hat sich ein Vernetzer-Beschleuniger-System herausgestellt, das zumindest eine epoxidgruppenhaltige Substanz als Vernetzer und zumindest eine bei einer Temperatur unterhalb der Schmelztemperatur des Poly(meth)acrylats für die Verknüpfungsreaktion beschleunigend wirkende Substanz als Beschleuniger umfasst. Das System setzt einen Gehalt der Polymere an funktionellen Gruppen voraus, die mit Epoxidgruppen Vernetzungsreaktionen eingehen können. Als epoxidgruppenhaltige Substanzen eigenen sich multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielsweise primäre und/oder sekundäre Amine; insbesondere tertiäre und/oder multifunktionelle Amine eingesetzt werden. Einsetzbar sind auch Substanzen, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen.

Als Beschleuniger können weiterhin beispielsweise solche auf Phosphorbasis, wie Phosphine und/oder Phosphoniumverbindungen, eingesetzt werden.

Als funktionelle Gruppen des zu vernetzenden Poly(meth)acrylats eigenen sich besonders Säuregruppen (beispielsweise Carbonsäure-, Sulfonsäure- und/oder Phosphonsäuregruppen) und/oder Hydroxygruppen und/oder Säureanhydridgruppen und/oder Epoxidgruppen und/oder Amingruppen. Es ist besonders vorteilhaft, wenn das Polymer einpolymerisierte Acrylsäure und/oder Methacrylsäure enthält.

Es kann jedoch auch vorteilhaft sein, auf Beschleuniger zu verzichten, da diese zum Beispiel zum Vergilben neigen können (insbesondere stickstoffhaltige Substanzen). Als Vernetzer, die ohne Beschleunigerzusatz auskommen, eignen sich beispielsweise Epoxycyclohexylderivate; insbesondere bei Anwesenheit von Carbonsäuregruppen im zu vernetzenden Poly(meth)acrylat. Dies kann zum Beispiel durch mindestens 5 Gew.-% einpolymerisierte Acrylsäure in das Polymer realisiert sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen. Die Abwesenheit dieser Substanzen bezieht sich dabei insbesondere auf extern zugesetzte, also nicht einpolymerisierte bzw. in das Polymergerüst eingebaute Beschleuniger; besonders bevorzugt sind aber weder extern zugesetzte noch einpolymerisierte, insbesondere gar keine Beschleuniger zugegen. Als besonders vorteilhafte Vernetzer haben sich Epoxycyclohexylcarboxylate wie (3,4-Epoxycyclohexan)methyl-3,4-epoxycyclohexylcarboxylat herausgestellt.

Die erfindungsgemäße Haftklebemasse kann neben dem bzw. den Poly(meth)acrylat(en) auch ein oder mehrere weitere Polymere enthalten. Dazu zählen beispielsweise Acrylatunlösliche Polymere wie Polyolefine (z.B. LDPE, HDPE, Polypropylen), Polyolefin-Copolymere (z.B.Ethylen-Propylen-Copolymere), Polyester, Copolyester, Polyamide, Copolyamide, fluorierte Polymere, Polyalkylenoxide, Polyvinylalkohol, Ionomere (bspw. mit Base neutralisierte Ethylen-Methacrylsäure-Copolymere), Celluloseacetat, Polyacrylnitril, Polyvinylchlorid, thermoplastische Polyurethane, Polycarbonate, ABS-Copolymere und Polydimethylsiloxane. Weitere geeignete Polymere sind Polybutadien, Polyisopren, Polychloropren und Copolymere von Styrol und Dienen. Daneben sind Polymere geeignet, die inhärent haftklebrig sind oder durch den Zusatz von Klebkraftverstärkern haftklebrig gemacht werden können, beispielsweise Poly-$\alpha$-Olefine wie Polyocten, Polyhexen und ataktisches Polypropylen; spezielle Blockcopolymere (Diblock-, Triblock-, sternförmige Blockcopolymere und Kombinationen davon), Natur- und Synthesekautschuke, Silicone und Ethylenvinylacetat.

In einer speziellen Ausführungsform enthält die erfindungsgemäße Haftklebemasse 15 bis 50 Gew.-% mindestens eines Synthesekautschuks. Bevorzugt ist Synthesekautschuk zu 20 bis 40 Gew.-%, jeweils bezogen auf das Gesamtgewicht der Haftklebemasse, enthalten.

Bevorzugt ist in dieser Ausführungsform mindestens ein Synthesekautschuk der erfindungsgemäßen Haftklebemasse ein Blockcopolymer mit einem Aufbau A-B, A-B-A, $(AB)_n$, $(A-B)_nX$ oder $(A-B-A)_nX$, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl $\geq$ 2 stehen.

Insbesondere sind in dieser Ausführungsform alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also vorzugsweise einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, $(AB)_3X$ oder $(A-B)_4X$, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, $(A-B)_3X$ oder $(A-B)_4X$, das bevorzugt mindestens Diblockcopolymere A-B und/oder Triblockcopolymere A-B-A enthält.

Der Block A ist generell ein glasartiger Block mit einer bevorzugten Glasübergangstemperatur (Tg, DSC), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die erfindungsgemäße Haftklebemasse enthält dreidimensionale Körper K aus einem anorganischen Material. Im erfindungsgemäßen Sinn wird unter einem dreidimensionalen Körper eine dreidimensionale beschränkte geometrische Form verstanden, welche durch Grenzflächen beschrieben werden kann. Eine geometrische Form heißt dreidimensional, wenn sie in keiner Ebene vollständig enthalten ist, und beschränkt, wenn es eine Kugel gibt, welche diese Form vollständig enthält.

Die bekanntesten Körper besitzen flache oder kreis- beziehungsweise kugelförmige Grenzflächen. Als Beispiele dienen Zylinder, Kegel, Kugel, Prisma, Pyramide, Tetraeder, Würfel sowie die fünf regulären Polyeder. Wenn ein Körper ausschließlich von ebenen Flächen begrenzt wird, spricht man von einem Polytop oder von einem beschränkten Polyeder (Vielflächner).

Demgemäß können die erfindungsgemäß eingesetzten Körper unter anderem die folgende Form aufweisen:

- Spat mit den Spezialfällen Quader und Hexaeder (Würfel)
- Prisma mit der Verallgemeinerung Zylinder und den Spezialfällen Quader und Hexaeder
- Pyramide mit der Verallgemeinerung Kegel und dem Spezialfall Tetraeder
- Antiprisma mit dem Spezialfall Oktaeder
- Halbkugeln
- Schalenstücke.

Erfindungsgemäß bevorzugt sind die dreidimensionalen Körper K Ellipsoide, besonders bevorzugt Rotationsellipsoide und ganz besonders bevorzugt Kugeln.

Die Körper K, insbesondere auch die oben angeführten, zum Beispiel ein Würfel, weisen vorzugsweise keine Ecken oder scharfen Kanten auf. Hierzu können gegebenenfalls die eigentlich vorhandenen Ecken oder Kanten abgerundet sein oder werden.

Unter der "maximalen Ausdehnung" eines Körpers K wird die für den betreffenden Körper größtmögliche Länge einer Geraden verstanden, die zwei in der Oberfläche des Körpers K liegende Punkte miteinander verbindet. Hat ein Körper K die Form einer Kugel, so entspricht die maximale Ausdehnung seinem Durchmesser. Bevorzugt beträgt die maximale Ausdehnung der dreidimensionalen Körper K 45 $\mu$m bis 150 $\mu$m, stärker bevorzugt 50 $\mu$m bis 100 $\mu$m, beispielsweise 52 $\mu$m bis 85 $\mu$m und ganz besonders bevorzugt 55 $\mu$m bis 70 $\mu$m.

Das anorganische Material der dreidimensionalen Körper K ist bevorzugt ausgewählt aus der Gruppe bestehend aus Glas, Keramik und Flugasche, insbesondere aus der Gruppe bestehend aus Keramik und Flugasche. Bei den Körpern K kann es sich sowohl um Vollkörper als auch um Hohlkörper handeln. Sofern es sich um Hohlkörper handelt, beschreibt der Ausdruck "Körper aus einem anorganischen Material", dass es sich um Hohlkörper handelt, deren Wand aus einem anorganischen Material besteht. Das anorganische Material ist somit das Material des Feststoffanteils der Körper K.

In einer speziellen Ausführungsform ist das anorganische Material der dreidimensionalen Körper K Glas.

In einer weiteren speziellen Ausführungsform ist das anorganische Material der dreidimensionalen Körper K Keramik.

In einer weiteren speziellen Ausführungsform ist das anorganische Material der dreidimensionalen Körper K Flugasche.

Besonders bevorzugt sind die dreidimensionalen Körper K Vollglaskugeln, Keramikhohlkugeln und/oder Flugasche-Hohlkugeln; insbesondere Keramikhohlkugeln oder Flugasche-Hohlkugeln.

Bevorzugt enthält die erfindungsgemäße Haftklebemasse 30 bis 50 Gew.-% dreidimensionale Körper K mit einer maximalen Ausdehnung von 45 $\mu$m bis 150 $\mu$m. Besonders bevorzugt enthält die erfindungsgemäße Haftklebemasse 30 bis 50 Gew.-% dreidimensionale Körper K mit einer maximalen Ausdehnung von 45 $\mu$m bis 80 $\mu$m. Insbesondere enthält die erfindungsgemäße Haftklebemasse 30 bis 50 Gew.-% Vollglaskugeln, Keramikhohlkugeln und/oder Flugaschehohlkugeln mit einem Durchmesser von 45 $\mu$m bis 80 $\mu$m. Ganz besonders bevorzugt enthält die erfindungsgemäße Haftklebemasse 30 bis 50 Gew.-% Keramikhohlkugeln und/oder Flugaschehohlkugeln mit einem Durchmesser

von 45 $\mu$m bis 80 $\mu$m.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung erfindungsgemäßer Haftklebemassen geeignet.

In einer Ausführungsform der Erfindung werden die Mikroballons in unexpandiertem Zustand zusammen mit einem oder mehreren Weichmachern eingesetzt, beispielsweise mit Phthalaten, wasserlöslichen Weichmachern, Polyestern, Weichharzen, Cyclohexandicarbonsäurediestern, Phosphaten oder Polyphosphaten. Die erfindungsgemäße Haftklebemasse enthält somit bevorzugt mindestens einen Weichmacher. Das Gewichtsverhältnis Mikroballons : Weichmacher beträgt bevorzugt 3 : 2 bis 2 : 3, stärker bevorzugt 1,2 : 1 bis 0,8 :1, insbesondere 1,1 : 1 bis 0,9 : 1. Weichmacher setzen die Festigkeit der Haftklebemasse herab und begünstigen damit eine kohäsive Spaltung und somit ein vorhersagbares Versagensverhalten sowie den Tack, die "Anfassklebrigkeit" der Masse. Ein vorhersagbares, berechenbares Versagensverhalten von Verklebungen ist beispielsweise in bautechnischen Anwendungen (Fassadenverklebung) und im Automobilbau (Verklebung von Stoßfängern) von Interesse.

Bevorzugte Weichmacher sind niedrigviskose Polyester mit einer dynamischen Viskosität bei 20 °C von $\leq$ 2500 mPas, gemessen nach DIN EN ISO 3219 (beispielsweise Palamoll® 652 der BASF, CAS-Nr. 208945-13-5). Derartige Weichmacher haben den zusätzlichen Vorteil, dass sie vergleichsweise gut kompatibel mit dem bzw. den Poly(meth)acrylat(en) sind und die Hüllen der Mikroballons nicht aufweichen.

Erfindungsgemäße Haftklebemassen können auch mit sogenannten vorexpandierten Mikroballons erzeugt werden. Bei dieser Gruppe findet die Expansion schon vor der Einmischung in die Polymermatrix statt. Erfindungsgemäß enthält die Haftklebemasse unabhängig vom Herstellungsweg und von der eingesetzten Ausgangsform der Mikroballons zumindest teilweise expandierte Mikroballons. Erfindungsgemäß bevorzugt weisen mindestens 90 % aller von den Mikroballons gebildeten Hohlräume der Haftklebemasse eine maximale Ausdehnung von 10 bis 500 $\mu$m, stärker bevorzugt von 15 bis 200 $\mu$m, auf.

Der Begriff "zumindest teilweise expandierte Mikroballons" wird erfindungsgemäß so verstanden, dass die Mikroballons zumindest soweit expandiert sind, dass damit eine Dichteverringerung der Klebmasse in einem technisch sinnvollen Ausmaß im Vergleich zu derselben Klebmasse mit den unexpandierten Mikroballons bewirkt wird. Dies bedeutet, dass die Mikroballons nicht zwingend vollständig expandiert sein müssen. Bevorzugt sind die "mindestens teilweise expandierten Mikroballons" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikroballons und soll nicht ausdrücken, dass nur ein Teil der in Betracht kommenden Mikroballons (an)expandiert sein muss. Wenn also "0,1 bis 10 Gew.-% zumindest teilweise expandierte Mikroballons" in der Klebmasse enthalten sind, dann bedeutet dies, dass sämtliche dieser "0,1 bis 10 Gew.-% zumindest teilweise expandierten Mikroballons" zumindest teilweise expandiert im vorstehenden Sinne sind und unexpandierte Mikroballons nicht zu den "0,1 bis 10 Gew.-% zumindest teilweise expandierten Mikroballons" gehören.

Bevorzugt beträgt das Gewichtsverhältnis der dreidimensionalen Körper K zu den zumindest teilweise expandierten Mikroballons M in der erfindungsgemäßen Klebmasse von 6:1 bis 30:1.

Die erfindungsgemäße Haftklebemasse kann Additive enthalten, um bestimmte Eigenschaften hervorzurufen oder diese stärker auszuprägen.

In einer Ausführungsform enthält die erfindungsgemäße Haftklebemasse mindestens ein Harz. Dabei handelt es sich bevorzugt um ein Klebharz. Als Harze im Sinne der Erfindung werden oligo- und polymere Verbindungen mit einem zahlenmittleren Molekulargewicht $M_n$ von nicht mehr als 5.000 g/mol angesehen. Der maximale Harzanteil wird dabei durch die Mischbarkeit mit den - gegebenenfalls mit weiteren Stoffen abgemischten - höhermolekularen Polymeren begrenzt; es sollte sich jedenfalls zwischen Harz und Polymeren eine homogene Mischung ausbilden.

Die klebrig machenden Harze (Klebharze) sind bevorzugt ausgewählt aus der Gruppe bestehend aus Pinen-, Inden- und Kolophoniumharzen und deren disproportionierten, hydrierten, polymerisierten und/oder veresterten Derivaten und Salzen, aliphatischen und aromatischen Kohlenwasserstoffharzen, Terpenharzen und Terpenphenolharzen sowie C5-, C9- und andere Kohlenwasserstoffharzen, jeweils für sich oder in Kombination miteinander. Bevorzugte Terpenphenolharze sind beispielsweise Dertophene T105 und Dertophene T110, ein bevorzugtes hydriertes Kolophoniumderivat ist Foral 85.

Die erfindungsgemäße Haftklebemasse kann Alterungsschutzmittel enthalten. Bevorzugt enthält die erfindungsgemäße Haftklebemasse in der oben beschriebenen Ausführungsform, in der sie mindestens einen Synthesekautschuk enthält, mindestens ein Alterungsschutzmittel.

Die erfindungsgemäße Haftklebemasse kann darüber hinaus Flammschutzmittel enthalten. Bevorzugte Flammschutzmittel sind hochmolekulare Phosphatester, beispielsweise Reofos® RDP (CAS-Nr. 57583-54-7). Die Flammschutzmittel werden bevorzugt in Abmischung mit den Mikroballons zu der in der Entstehung befindlichen Haftklebemasse gegeben.

Ein weiterer Gegenstand der Erfindung ist ein Klebeband, das eine erfindungsgemäße Haftklebemasse enthält.

In einer Ausführungsform bildet eine Schicht der erfindungsgemäßen Haftklebemasse das erfindungsgemäße Klebeband, das somit ein Transferklebeband ist. Bevorzugt enthält die erfindungsgemäße Haftklebemasse in dieser Ausführungsform mindestens ein Harz, das aus der Gruppe bestehend aus Pinen-, Inden- und Kolophoniumharzen und deren disproportionierten, hydrierten, polymerisierten und/oder veresterten Derivaten und Salzen, aliphatischen und aromatischen Kohlenwasserstoffharzen, Terpenharzen und Terpenphenolharzen sowie C5-, C9- und andere Kohlenwasserstoffharzen, jeweils für sich oder in Kombination miteinander, ausgewählt ist. Besonders bevorzugt enthält die erfindungsgemäße Haftklebemasse in dieser Ausführungsform ein Terpenphenolharz, insbesondere 20 bis 40 Gew.-%, beispielsweise 25 bis 35 Gew.-% mindestens eines Terpenphenolharzes, jeweils bezogen auf das Gesamtgewicht der Haftklebemasse.

In einer anderen Ausführungsform des erfindungsgemäßen Klebebands enthält dieses auf mindestens einer Seite der erfindungsgemäßen Haftklebemasse eine weitere Haftklebemasse HM1. Bevorzugt enthält das erfindungsgemäße Klebeband eine erfindungsgemäße Haftklebemasse, und diese enthält auf ihrer Ober- und Unterseite jeweils eine weitere Haftklebemasse HM1 beziehungsweise HM2. Besonders bevorzugt sind HM1 und HM2 Haftklebemassen, die zu mindestens 50 Gew.-%, insbesondere zu mindestens 70 Gew.-%, beispielsweise zu mindestens 90 Gew.-%, jeweils bezogen auf das Gesamtgewicht der betreffenden Haftklebemasse, ein oder mehrere Poly(meth)acrylat(e) enthalten, die auf die folgende Monomerenzusammensetzung zurückzuführen sind:

80 bis 95 Gew.-% 2-Ethylhexylacrylat und/oder n-Butylacrylat,
5 bis 20 Gew.-% Acrylsäure.

Die Poly(meth)acrylate der HM1 und HM2 können jeweils vernetzt sein, bevorzugt auf die oben für die erfindungsgemäße Haftklebemasse beschriebene Weise, insbesondere durch thermische Vernetzung über mindestens ein oder mehrere Epoxycyclohexylderivate in Abwesenheit von Beschleunigern, insbesondere von Protonenakzeptoren, Elektronenpaardonatoren (Lewisbasen) und/oder Elektronenpaarakzeptoren (Lewissäuren).

Die Begriffe Ober- und Unterseite dienen im Rahmen dieser Schrift lediglich zur lokalen Unterscheidung der beiden Oberflächen der erfindungsgemäßen Haftklebemasse und sollen darüber hinaus keine weiteren Richtungsinformationen enthalten. Auf der "Oberseite" bedeutet also insbesondere auf einer der Seiten der entsprechenden Schicht, auf der Unterseite auf der anderen Seite der entsprechenden Schicht.

**Experimenteller Teil**

Messmethoden:

Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER) (Messmethode A2):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Messmethode A3):

Die Angaben des gewichtsmittleren Molekulargewichtes Mw und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm · 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Raumgewicht/ Dichte (Messmethode A4):

Dichtebestimmung über den Masseauftrag und die Schichtdicke:
Das Raumgewicht beziehungsweise die Dichte $\rho$ einer beschichteten Selbstklebemasse wird über das Verhältnis vom Flächengewicht zu der jeweiligen Schichtdicke bestimmt:

$$\rho = \frac{m}{V} = \frac{MA}{d} \qquad [\rho] = \frac{[kg]}{[m^2]\cdot[m]} = \left[\frac{kg}{m^3}\right]$$

MA = Masseauftrag/Flächengewicht (ohne Linergewicht) in [kg/m$^2$]
d = Schichtdicke (ohne Linerdicke) in [m].

Bei diesem Verfahren wird die Rohdichte erhalten.
Diese Dichtebestimmung eignet sich insbesondere zur Bestimmung der Gesamtdichte fertiger, auch mehrschichtiger, Produkte.

90° Klebkraft Stahl - offene und abgedeckte Seite (Messmethode V1):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann.
Die dem Prüfuntergrund abgewandte Seite des Dreischichtverbundes wurde dann mit einer 50 $\mu$m Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht, das Muster in einem Winkel von 90 ° senkrecht nach oben abzuziehen. Die Klebkraftmessung erfolgte mit einer Zwick-Zugprüfmaschine.
Die Messergebnisse sind in N/cm angegeben und sind gemittelt aus drei Messungen.

Scherstandzeit (Messmethode V2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm x 13 mm (Länge x Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 $\mu$m Aluminiumfolie verstärkt und mit einer 2 kg Rolle 2mal hin und her überrollt. Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179° +/- 1 ° belastet. Dadurch wurde sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

_Ablösekraft bei einseitiger Kantenbelastung - dynamischer L-Test (Messmethode V3):_

Eine Prüfplatte (Stahl, 50 x 300 x 3 mm) wurde mit Ethanol gereinigt und 24 h bei 23 °C und 50 % rel. Luftfeuchte gelagert. Ein L-förmiger Stahlblechwinkel wurde für 30 min in Aceton gelagert und anschließend auf der zu verklebenden Seite mit einem Aceton-getränkten Lappen mehrmals abgewischt. Zum Abdunsten des Acetons wurde der Stahlblechwinkel für 10 min an der Luft gelagert.

Das auf 25 x 25 mm zugeschnittene Klebeband wurde auf der Unterseite des kleineren Schenkels des L-förmigen Stahlblechwinkels verklebt. Mit der anderen Seite des Klebebands wurde der Stahlblechwinkel anschließend auf der Prüfplatte verklebt. Die verklebten Substrate wurden mittels einer Presse mit Stahlstempel mit 60 N für 5 s aneinander gepresst. Anschließend wurde der Prüfkörper für 24 h bei Normklima gelagert.

In die obere Klemmbacke einer Zugprüfmaschine wurde eine Zusatzplatte mit Haken eingespannt. Die Prüfplatte mit dem darauf verklebten Stahlblechwinkel wurde in eine Schiene eingeführt. Der längere Schenkel des L-förmigen Stahlblechwinkels wurde spannungslos mit dem Haken verbunden. Der Stahlblechwinkel wurde nun in einem Winkel von 90 ° zur Verklebungsfläche mit einer Geschwindigkeit von 300 mm / min von der Prüfplatte abgezogen. Die dabei gemessene Maximalkraft und das Bruchbild wurden ermittelt.

_Dynamische Scherfestigkeit (Messmethode V4)_

Das zu untersuchende Klebeband wurde quadratisch auf eine Kantenlänge von 25 mm zugeschnitten, zwischen zwei Stahlplatten überlappend verklebt und 1 Minute lang mit 0,9 kN angedrückt (Kraft P). Nach einer Lagerung von 24 h bei 23 °C und 50% rel. Feuchte wurde der Verbund in einer Zugprüfmaschine der Firma ZWICK mit 50 mm/min bei 23 °C und 50% rel. Feuchte so getrennt, dass die beiden Stahlplatten unter einem Winkel von 180° auseinander gezogen wurden. Die Maximalkraft wurde in N/cm$^2$ ermittelt.

_Verbundfestigkeit - dynamischer T-Block-Test (Messmethode V5)_

Zwei jeweils mit einem Loch versehene, T-förmige Aluminiumkörper (T-Blöcke, 25 x 25 x 25 mm) wurden für 30 min in Aceton gelagert, mit einem Aceton-getränkten Tuch abgewischt und 10 min an der Luft getrocknet. Das auf 25 x 25 mm zugeschnittene, zu untersuchende Klebeband wurde auf die Grundfläche eines der T-Blöcke aufgebracht, nach Abziehen des Releaseliners wurde an der freien Seite der zweite T-Block verklebt. Die Verklebung wurde für 15 s mit 110 N verpresst. Der Prüfkörper-Verbund wurde 24 h bei 23 °C und 50 % relativer Luftfeuchte gelagert.

Die miteinander verklebten T-Blöcke wurden anschließend mittels Haken in eine Zugprüfmaschine eingespannt. Der Prüfkörper wurde senkrecht zur Klebefläche mit 300 mm / min auseinandergezogen. Die Maximalkraft als Mittelwert aus jeweils fünf Messungen in N/cm$^2$ sowie das Bruchbild wurden ermittelt.

_Kommerziell erhältliche, eingesetzte Chemikalien (siehe nachstehende Tabelle)_

| Chemische Verbindung | Handelsname | Hersteller | CAS-Nr. |
|---|---|---|---|
| Bis-(4-tert-butylcyclohexyl)peroxydicarbonat | Perkadox 16 | Akzo Nobel | 15520-11-3 |
| 2,2'-Azobis(2-methylpropionitril), AIBN | Vazo 64 | DuPont | 78-67-1 |
| Pentaerythrittetraglycidether | Polypox R16 | UPPC AG | 3126-63-4 |
| 3,4-Epoxycyclohexylmethyl-3,4-epoxycyclohexancarboxylat | Uvacure 1500 | Cytec Industries Inc. | 2386-87-0 |
| N,N-Dimethyl-N'3-dimethylaminopropyl-1,3-propandiamin | Jeffcat Z130 | Huntsman | |
| Mikroballons (MB1) (trocken-unexpandierte Mikrosphären, Durchmesser 9 - 15 $\mu$m, Expansions-Starttemperatur 106 - 111 °C, TMA-Dichte $\leq$ 25 kg/m$^3$) | Expancel 051 DU 40 | Expancel Nobel Industries | |
| Mikroballons (MB2) (trocken-unexpandierte Mikrosphären, Durchmesser 10 - 16 $\mu$m, Expansions-Starttemperatur 80 - 95 °C, TMA-Dichte $\leq$ 12 kg/m$^3$) | Expancel 031 DUX 40 | Expancel Nobel Industries | |

(fortgesetzt)

| Chemische Verbindung | Handelsname | Hersteller | CAS-Nr. |
|---|---|---|---|
| Keramikhohlkugeln (K1) (Durchmesser ca. 65 $\mu$m, maximale Dichte 0,85 g/cm$^3$) | E-Spheres SL 150 | Omega Minerals Germany | |
| Flugasche-Hohlkugeln (K2) (Durchmesser ca. 60 $\mu$m, maximale Dichte 0,70 g/cm$^3$) | Fillite 160 | Omya Fillite | |
| Glasvollkugeln (K3) (Durchmesser ca. 60 $\mu$m, maximale Dichte 2,50 g/cm$^3$) | SiLibead Typ S 5211-7 | Sigmund Lindner | |
| Glasvollkugeln (K4) (Durchmesser ca. 10 $\mu$m, maximale Dichte 2,50 g/cm$^3$) | Speriglass EMB-20 | Potters Industries LLC | |
| Terpenphenolharz (Erweichungspunkt 110 °C; Mw = 500 - 800 g/mol; D = 1,50) | Dertophene T110 | DRT resins | 25359-84-6 |
| Adipinsäure-basierter Polyester | Palamoll 652 | BASF | |
| Acrylsäure-n-butylester | n-Butylacrylat | Rohm & Haas | 141-32-2 |
| Acrylsäure | Acrylsäure rein | BASF | 79-10-7 |
| Acrylsäure-2-ethylhexylester | 2-Ethylhexylacrylat | Brenntag | 103-11-7 |
| Methylacrylat | | BASF | 96-33-3 |

Herstellung Basispolymer Ac 1:

Ein für radikalische Polymerisationen konventioneller Reaktor wurde mit 72,0 kg 2-Ethylhexylacrylat, 20,0 kg Methylacrylat, 8,0 kg Acrylsäure und 66,6 kg Aceton/ Isopropanol (94:6) befüllt. Nach 45minütiger Durchleitung von Stickstoffgas unter Rühren wurde der Reaktor auf 58 °C hochgeheizt und 50 g AIBN, gelöst in 500 g Aceton, hinzugegeben. Anschließend wurde das äußere Heizbad auf 75 °C erwärmt und die Reaktion konstant bei dieser Außentemperatur durchgeführt. Nach 1 h wurden erneut 50 g AIBN, gelöst in 500 g Aceton, zugegeben und nach 4 h wurde mit 10 kg Aceton/Isopropanol-Gemisch (94:6) verdünnt.

Nach 5 h sowie nach 7 h wurde jeweils mit 150 g Bis-(4-tert-butylcyclohexyl)-peroxydicarbonat, jeweils gelöst in 500 g Aceton, nachinitiiert. Nach 22 h Reaktionszeit wurde die Polymerisation abgebrochen und auf Raumtemperatur abgekühlt. Das Produkt hatte einen Feststoffgehalt von 55,8 % und wurde getrocknet. Das resultierende Polyacrylat hatte einen K-Wert von 58,9, ein mittleres Molekulargewicht von Mw = 748.000 g/mol, eine Polydispersität von D (Mw/Mn) = 8,9 und eine statische Glasübergangstemperatur von Tg = - 35,2 °C.

Polyacrylathaftkleber Ac-PSA:

Ein für radikalische Polymerisationen konventioneller 200 L-Glasreaktor wurde mit 9,6 kg Acrylsäure, 20,0 kg Butylacrylat, 50,4 kg 2-Ethylhexylacrylat und 53,4 kg Aceton/ Benzin 60/95 (1:1) befüllt. Nach 45minütiger Durchleitung von Stickstoffgas unter Rühren wurde der Reaktor auf 58 °C hochgeheizt und 60 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 60 g AIBN hinzugegeben. Nach 4 h und 8 h wurde mit jeweils 20,0 kg Aceton/Benzin 60/95 (1:1) Gemisch verdünnt. Zur Reduktion der Restinitiatoren wurden nach 8 h und nach 10 h jeweils 180 g Bis-(4-tert-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,2 Gew.-% Uvacure® 1500 abgemischt, auf einen Feststoffgehalt von 30 % mit Aceton verdünnt und dann aus Lösung auf eine silikonisierte Trennfolie (50 $\mu$m Polyester) beschichtet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug 50 g/m$^2$.

Herstellung von Mikroballonmischungen:

Die Mikroballons werden in ein Behältnis gegeben, in welches ein Dispergiermittel vorgelegt wurde. In einem Planetenrührwerk der Firma pc-Laborsystem wird bei einem Druck von 5 mbar und einer Drehzahl von 600 rpm für 30 min gerührt.

Verfahren 1: Aufkonzentration / Herstellung der Haftkleber:

Das Acrylatcopolymer (Basispolymer Ac1) wurde mittels Einschneckenextruder (Aufkonzentrationsextruder, Berstorff GmbH, Deutschland) weitestgehend vom Lösemittel befreit. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Polymers lag bei ca. 115 °C. Der Feststoffgehalt betrug nach diesem Aufkonzentrationsschritt 99,8%. Die Masse Ac1 wurde mittels eines Walzenkalanders zu einer Bahn geformt.

Verfahren 2: Herstellung geschäumte Masse (erfindungsgemäße Haftklebemasse):

Das aufkonzentrierte Basispolymer wurde in einem Fütterextruder (Einschneckenförderextruder der Firma TROESTER GmbH & Co KG, Deutschland) aufgeschmolzen und mit diesem als Polymerschmelze über einen beheizbaren Schlauch in einen Planetwalzenextruder der Firma Entex (Bochum) gefördert (es wurde insbesondere ein PWE mit vier unabhängig voneinander heizbaren Modulen $T_1$, $T_2$, $T_3$, $T_4$ eingesetzt). Über zwei Sidefeeder wurde nun der Füllstoff (anorganische Körper K) zugegeben. Weiter downstream wurde der Vernetzer hinzugefügt, alle Komponenten wurden zu einer homogenen Polymerschmelze gemischt.

Mittels einer Schmelzepumpe und eines beheizbaren Schlauches wurde die Polymerschmelze in einen Doppelschneckenextruder (Firma Berstorff) überführt, und die Beschleunigerkomponete wurde hinzugefügt. Anschließend wurde die gesamte Mischung in einem Vakuumdom bei einem Druck von 175 mbar von allen Gaseinschlüssen befreit. Im Anschluss an die Vakuumzone befand sich auf der Schnecke ein Blister, welcher einen Druckaufbau in dem darauf folgenden Segment ermöglichte. Durch geeignete Steuerung der Extruderdrehzahl und der Schmelzepumpe wurde in dem Segment zwischen Blister und Schmelzepumpe ein Druck von größer 8 bar aufgebaut, an einer weiteren Dosierstelle die Mikroballonmischung (Mikroballons eingebettet in das Dispergierhilfsmittel) hinzugefügt und mittels eines Mischelements homogen in die Vormischung eingearbeitet. Die entstandene Schmelzmischung wurde in eine Düse überführt.

Nach Verlassen der Düse, also nach Druckabfall, expandierten die eingearbeiteten Mikroballons, wobei durch den Druckabfall eine scherungsarme, insbesondere scherungsfreie, Abkühlung der Polymermasse erfolgte. Es entstand eine geschäumte Selbstklebemasse, welche anschließend mittels eines Walzenkalanders bahnförmig ausgeformt wurde.

Verfahren 3: Herstellung von 3-Schichtaufbauten mittels 2-Walzenkalander:

Mittels einer Verteilerdüse wurde die mit dem Vernetzer-Beschleuniger-System, den Mikroballons und den Füllstoffen fertig compoundierte geschäumte Masse dem Walzenspalt zugeführt. Die Ausformung der geschäumten Masse zu einem viskoelastischen Film erfolgte zwischen den Kalanderwalzen im Walzenspalt zwischen zwei Selbstklebemassen Ac-PSA, die ihrerseits auf silikonisierten Trennfolien beschichtet zugeführt wurden. Dabei kam es gleichzeitig zur Ausformung der geschäumten Masse auf die eingestellte Schichtdicke und zur Beschichtung mit den beiden zugeführten Selbstklebemassen. Um die Verankerung der Selbstklebemassen Ac-PSA auf der geschäumten Trägerschicht zu verbessern, wurden die Selbstklebemassen vor der Zuführung in den Walzenspalt an einer Corona-Station coroniert (Corona-Anlage der Firma VETAPHONE, Dänemark, 50 W·min/m$^2$). Diese Behandlung führte nach der Herstellung des Dreischichtverbundes zu einer verbesserten chemischen Anbindung an die geschäumte Trägerschicht.

Die Bahngeschwindigkeit bei Durchlaufen der Beschichtungsanlage betrug 30 m/min.

Nach Verlassen des Walzenspaltes wurde eine Trennfolie ausgedeckt und das fertige Dreischichtprodukt mit der zweiten Trennfolie aufgewickelt.

Rezepturen der geschäumten Schichten

| Nr. | Komponenten - Anteil in Gew.-% | | | | | | | | Dichte, kg/m$^3$ |
|---|---|---|---|---|---|---|---|---|---|
| | Ac1 | K | Palamoll 652 | MB1 | MB2 | Polypox R16 | Jeffcat Z130 | Harz DT110 | |
| 1 | 53,46 | 1 (40) | 3 | 3 | | 0,35 | 0,19 | | 1041 |

(fortgesetzt)

| Nr. | Komponenten - Anteil in Gew.-% | | | | | | | | Dichte, kg/m$^3$ |
|---|---|---|---|---|---|---|---|---|---|
| | Ac1 | K | Palamoll 652 | MB1 | MB2 | Polypox R16 | Jeffcat Z130 | Harz DT110 | |
| 2 | 58,46 | 1 (35) | 3 | | 3 | 0,35 | 0,19 | | 885 |
| 3 | 60,46 | 1 (35) | 2 | | 2 | 0,35 | 0,19 | | 949 |
| 4 | 60,40 | 2 (35) | 2 | 2 | | 0,35 | 0,25 | | 880 |
| 5 | 63,40 | 3 (30) | 3 | | 3 | 0,35 | 0,25 | | 1320 |
| 6 | 41,66 | 1 (35) | 3 | | 3 | 0,35 | 0,19 | 16,80 | 853 |
| Nicht erfindungsgemäße Beispiele | | | | | | | | | |
| 7 | 99,40 | | | | | 0,35 | 0,25 | | 788 |
| 8 | 67,46 | 1 (8) | 12 | 12 | | 0,35 | 0,19 | | 780 |
| 9 | 76,66 | | 3 | | 3 | 0,35 | 0,19 | 16,80 | 760 |
| 10 | 59,46 | 1 (40) | | | | 0,35 | 0,19 | | 1122 |
| 11 | 63,40 | 4 (30) | 3 | | 3 | 0,35 | 0,25 | | 1320 |

Testergebnisse (erfindungsgemäße Beispiele)

| Klebeband mit geschäumter Schicht Nr. | 1 | 2 | 3 | 4 | 5 | 6 |
|---|---|---|---|---|---|---|
| Aufbau (Anzahl Schichten) | 3 | 3 | 3 | 3 | 3 | 1 |
| | | | | | | |
| Dynamischer Schertest nach 3 Tagen Raumtemperatur, N/cm$^2$ | 94 | 91 | 87 | 90 | 95 | 164 |
| Bruchbild | k | k | k | k | k | k |
| Dynamischer L-Test, N/25 mm | 280 | 280 | 230 | 310 | 290 | 420 |
| Bruchbild | k | k | k | k | k | k |
| T-Block-Test, N/cm$^2$ | 90 | 77 | 78 | 105 | 101 | 180 |
| Bruchbild | k | k | k | k | k | k |
| Klebkraft Stahl ASTM sofort, N/cm | 23 | 17 | 18 | 15 | 18 | 28 |
| Bruchbild | k | k | k | k | k | k |
| Klebkraft Stahl ASTM nach 3 Tagen Raumtemperatur, N/cm | 56 | 45 | 42 | 51 | 52 | 45 |
| Bruchbild | k | k | k | k | k | k |
| Scherstandzeit bei 70 °C, 5 N, min | > 10.000 | > 10.000 | > 10.000 | > 10.000 | > 10.000 | 520 |

| Scherstandzeit nach 3 Tagen Raumtemperatur, 10 N, min | > 10.000 | > 10.000 | > 10.000 | > 10.000 | > 10.000 | > 10.000 |
|---|---|---|---|---|---|---|

Testergebnisse (nicht erfindungsgemäße Beispiele)

| Klebeband mit geschäumter Schicht Nr. | 7 | 8 | 9 | 10 | 11 |
|---|---|---|---|---|---|
| Aufbau (Anzahl Schichten) | 3 | 3 | 1 | 3 | 3 |
| | | | | | |
| Dynamischer Schertest nach 3 Tagen Raumtemperatur, $N/cm^2$ | 60 | 105 | 87 | 82 | 78 |
| Bruchbild | k | a | k | a | a |
| Dynamischer L-Test, N/25 mm | 180 | 290 | 230 | 282 | 220 |
| Bruchbild | k | a | k | k | a |
| T-Block-Test, $N/cm^2$ | 56 | 70 | 78 | 52 | 70 |
| Bruchbild | k | k | k | a | a |
| Klebkraft Stahl ASTM sofort, N/cm | 12 | 18 | 19 | 8 | 13 |
| Bruchbild | a | a | a | a | a |
| Klebkraft Stahl ASTM nach 3 Tagen Raumtemperatur, N/cm | 22 | 25 | 41 | 18 | 20 |
| Bruchbild | a | a | a | a | a |
| Scherstandzeit bei 70 °C, 5 N, min | 320 | 120 | 510 | > 10.000 | 2.000 |
| Scherstandzeit nach 3 Tagen Raumtemperatur, 10 N, min | 2.200 | 3.100 | 1.600 | > 10.000 | > 10.000 |

**Patentansprüche**

1. Haftklebemasse, enthaltend

   - mindestens 30 Gew.-% mindestens eines Poly(meth)acrylats;
   - 10 - 60 Gew.-% dreidimensionale Körper K aus einem anorganischen Material mit einer maximalen Ausdehnung von 40 bis 300 $\mu$m; und
   - 0,1 - 10 Gew.-% zumindest teilweise expandierte Mikroballons M,

   jeweils bezogen auf das Gesamtgewicht der Haftklebemasse.

2. Haftklebemasse gemäß Anspruch 1, **dadurch gekennzeichnet, dass** das anorganische Material der dreidimensionalen Körper K Glas, Keramik und/oder Flugasche ist.

3. Haftklebemasse gemäß Anspruch 1, **dadurch gekennzeichnet, dass** die dreidimensionalen Körper K Vollglaskugeln, Keramikhohlkugeln und/oder Flugasche-Hohlkugeln sind.

4. Haftklebemasse gemäß mindestens einem der vorstehenden Ansprüche, **dadurch gekennzeichnet, dass** die maximale Ausdehnung der dreidimensionalen Körper K 45 $\mu$m bis 150 $\mu$m beträgt.

5. Haftklebemasse gemäß mindestens einem der vorstehenden Ansprüche, **dadurch gekennzeichnet, dass** die Haftklebemasse 30 - 50 Gew.-% dreidimensionale Körper K enthält.

6. Haftklebemasse gemäß mindestens einem der vorstehenden Ansprüche, **dadurch gekennzeichnet, dass** die Haftklebemasse 30 - 50 Gew.-% dreidimensionale Körper K mit einer maximalen Ausdehnung von 45 bis 150 $\mu$m

enthält.

7. Haftklebemasse gemäß mindestens einem der vorstehenden Ansprüche, **dadurch gekennzeichnet, dass** das Gewichtsverhältnis dreidimensionale Körper K : zumindest teilweise expandierte Mikroballons M von 6 : 1 bis 30 : 1 beträgt.

8. Klebeband, enthaltend eine Haftklebemasse A gemäß mindestens einem der vorstehenden Ansprüche.

9. Klebeband gemäß Anspruch 8, **dadurch gekennzeichnet, dass** das Klebeband auf mindestens einer Seite der Haftklebemasse A eine weitere Haftklebemasse enthält.


**Claims**

1. Pressure sensitive adhesive comprising

   - at least 30 wt% of at least one poly(meth)acrylate;
   - 10-60 wt% of three-dimensional bodies K made from an inorganic material with a maximum extent of 40 to 300 $\mu$m; and
   - 0.1-10 wt% of at least partly expanded microballoons M,

   based in each case on the total weight of the pressure sensitive adhesive.

2. Pressure sensitive adhesive according to Claim 1, **characterized in that** the inorganic material of the three-dimensional bodies K is glass, ceramic and/or flyash.

3. Pressure sensitive adhesive according to Claim 1, **characterized in that** the three-dimensional bodies K are solid glass beads, hollow ceramic beads and/or hollow flyash beads.

4. Pressure sensitive adhesive according to at least one of the preceding claims, **characterized in that** the maximum extent of the three-dimensional bodies K is 45 $\mu$m to 150 $\mu$m.

5. Pressure sensitive adhesive according to at least one of the preceding claims, **characterized in that** the pressure sensitive adhesive contains 30-50 wt% of three-dimensional bodies K.

6. Pressure sensitive adhesive according to at least one of the preceding claims, **characterized in that** the pressure sensitive adhesive contains 30-50 wt% of three-dimensional bodies K having a maximum extent of 45 to 150 $\mu$m.

7. Pressure sensitive adhesive according to at least one of the preceding claims, **characterized in that** the weight ratio of three-dimensional bodies K to at least partly expanded microballoons M is from 6:1 to 30:1.

8. Adhesive tape comprising a pressure sensitive adhesive A according to at least one of the preceding claims.

9. Adhesive tape according to Claim 8, **characterized in that** the adhesive tape comprises on at least one side of the pressure sensitive adhesive A a further pressure sensitive adhesive.


**Revendications**

1. Masse adhésive de contact, contenant

   - au moins 30 % en poids d'au moins un poly(méth)acrylate ;
   - 10 à 60 % en poids d'un corps tridimensionnel K en un matériau inorganique ayant une extension maximale de 40 à 300 $\mu$m ; et
   - 0,1 à 10 % en poids d'au moins un microballon partiellement expansé M,

   dans chaque cas par rapport au poids total de la masse adhésive de contact.

EP 3 093 322 B1

**2.** Masse adhésive de contact selon la revendication 1, **caractérisée en ce que** le matériau inorganique du corps tridimensionnel K est du verre, de la céramique et/ou des cendres volantes.

**3.** Masse adhésive de contact selon la revendication 1, **caractérisée en ce que** les corps tridimensionnels K sont des billes de verre plein, des billes creuses de céramique et/ou des billes creuses de cendres volantes.

**4.** Masse adhésive de contact selon au moins l'une des revendications précédentes, **caractérisée en ce que** l'extension maximale des corps tridimensionnels K est de 45 μm à 150 μm.

**5.** Masse adhésive de contact selon au moins l'une des revendications précédentes, **caractérisée en ce que** la masse adhésive de contact contient 30 à 50 % en poids de corps tridimensionnels K.

**6.** Masse adhésive de contact selon au moins l'une des revendications précédentes, **caractérisée en ce que** la masse adhésive de contact contient 30 à 50 % en poids de corps tridimensionnels K ayant une extension maximale de 45 à 150 μm.

**7.** Masse adhésive de contact selon au moins l'une des revendications précédentes, **caractérisée en ce que** le rapport en poids corps tridimensionnels K:microballons au moins partiellement expansés M est de 6:1 à 30:1.

**8.** Ruban adhésif contenant une masse adhésive de contact A selon au moins l'une des revendications précédentes.

**9.** Ruban adhésif selon la revendication 8, **caractérisé en ce que** le ruban adhésif contient sur au moins une face de la masse adhésive de contact A une autre masse adhésive de contact.

**EP 3 093 322 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0818521 A2
- DE 2821606 A1
- EP 1995282 A1
- US 20070104943 A1
- DE 102009015233 A1
- DE 102010062669 A1
- WO 2010147888 A2
- US 4855170 A

**In der Beschreibung aufgeführte Nicht-Patentliteratur**

- *CHEMICAL ABSTRACTS,* 208945-13-5
- *CHEMICAL ABSTRACTS,* 57583-54-7